**Europäisches Patentamt**

**European Patent Office**

**Office européen des brevets**

(11) Veröffentlichungsnummer: **0 216 008**
**B1**

# (12) EUROPÄISCHE PATENTSCHRIFT

(45) Veröffentlichungstag der Patentschrift:
03.05.89

(51) Int. Cl.⁴: **F16D 65/60**

(21) Anmeldenummer: **86106781.7**

(22) Anmeldetag: **17.05.86**

(54) **Selbsttätige Nachstelleinrichtung für den Bremshebel einer Bremse, insbesondere für Strassenfahrzeuge.**

(30) Priorität: **21.09.85 DE 3533686**

(43) Veröffentlichungstag der Anmeldung:
**01.04.87 Patentblatt 87/14**

(45) Bekanntmachung des Hinweises auf die Patenterteilung:
**03.05.89 Patentblatt 89/18**

(84) Benannte Vertragsstaaten:
**AT CH DE FR GB IT LI SE**

(56) Entgegenhaltungen:
**DE-A- 3 228 796**
**DE-B- 1 575 778**
**DE-C- 2 528 603**
**US-A- 3 526 303**

(73) Patentinhaber: **WABCO Westinghouse Fahrzeugbremsen GmbH, Am Lindener Hafen 21 Postfach 91 12 80, D-3000 Hannover 91(DE)**

(72) Erfinder: **Vanselow, Jörg, Dipl.-Ing., Am Rehrkamp 20, D-3003 Ronnenberg 4(DE)**
Erfinder: **Frania, Josef, An der Bauerwiese 10 d, D-3000 Hannover 91(DE)**

(74) Vertreter: **Schrödter, Manfred, WABCO Westinghouse Fahrzeugbremsen GmbH Am Lindener Hafen 21 Postfach 91 12 80, D-3000 Hannover 91(DE)**

## Beschreibung

Die Erfindung betrifft eine selbsttätige Nachstelleinrichtung für den Bremshebel einer Bremse gemäß dem Oberbegriff des Patentanspruchs 1.

Eine derartige, aus der DE-PS 2 528 603 bekannte Einrichtung besteht im wesentlichen aus einem mit der Bremswelle eines Fahrzeugs formschlüssig verbundenen Schneckenrad, welches mit einer in einem auf der Bremswelle angeordneten Gehäuse eines Bremshebels vorgesehenen Schneckenwelle in Eingriff steht.

Eine ebenfalls im Gehäuse des Bremshebels angeordnete Antriebseinrichtung mit integriertem Leerhub steht in Wirkverbindung mit einem am Bremshebel in Form eines Hebelgestänges angeordneten Verstellmechanismus. Der in der Antriebseinrichtung integrierte Leerhub steht in Relation zu einem Ausschlag des Bremshebels, der dem Leerweg des Bremsbelages von der Ausgangsstellung bis zum Anliegen des Bremsbelages an die Bremstrommel proportional zugeordnet ist.

Ab einem vorgegebenen Leerhub der Antriebseinrichtung, z.B. bei Verschleiß des Bremsbelages, wird die Schneckenwelle des Schneckengetriebes durch die Antriebseinrichtung über eine Freilaufeinrichtung in Form einer Einwegkupplung verdreht. Hierdurch wird der Bremshebel um die Achse der Bremswelle verstellt, derart, daß die Bremswelle entsprechend des Verschleißes des Bremsbelages in eine neue Ausgangsstellung relativ zu einem Betätigungsorgan, z.B. einem Bremszylinder, gebracht wird.

Die Einwegkupplung umfaßt eine Schlingfeder in der Art einer Schraubenfeder, die um die Längsachse der Schneckenwelle angeordnet ist und die von der Antriebseinrichtung auf die Schneckenwelle bei Drehung im Nachstellsinn der Bremsen ein Drehmoment übertragen kann.

Die Einwegkupplung weist zwei auf der Schneckenwelle hintereinander angeordnete Hülsen auf, die von der Schlingfeder umgeben sind. Die erste Hülse ist auf der Schneckenwelle von dem Verstellmechanismus in Abhängigkeit vom Winkelausschlag des Bremshebels verdrehbar. Die zweite Hülse ist gegenüber der ersten Hülse in einem vorgegebenen Drehwinkel drehbeweglich.

Der Drehwinkel wird durch Anschläge, die zwischen der Schneckenwelle und der zweiten Hülse wirksam sind, begrenzt. Bei einer Verdrehung der ersten Hülse gegenüber der zweiten, von der Schneckenwelle festgehaltenen Hülse, im Nachstellsinn der Bremsnachstellung, bewirkt ein zwischen den Außendurchmessern der beiden Hülsen und dem Innendurchmesser der Schlingfeder wirksamwerdender Reibschluß eine Verkleinerung des Durchmessers der Schlingfeder. Die Verkleinerung des Durchmessers der Schlingfeder führt zu einer preßartigen Verbindung zwischen beiden Hülsen und der Schlingfeder, so daß von der Nachstelleinrichtung über die solchermaßen blockierte Kupplung auf die Schneckenwelle ein Drehmoment übertragen wird, welches eine Verdrehung der Schneckenwelle im Sinne einer Nachstellung der Bremsen bewirkt.

Beim Lösen der Bremsen, d.h. bei einer relativen Drehbewegung beider Hülsen zueinander entgegen dem Nachstellsinn wird der Reibschluß aufgehoben, so daß die Einwegkupplung als Freilauf wirkt.

Die Nachstelleinrichtung erlaubt eine Verstellung der Bremsen von Hand, z.B. zwecks Justierung der Einrichtung oder bei einem Wechsel des Bremsbelages. Hierzu ist die Schneckenwelle durch ein geeignetes Werkzeug (Schlüssel, Kurbel) verdrehbar. Bei der Drehung der Schneckenwelle im Sinne des Lösens der Bremsbacken von der Bremstrommel wirkt jedoch die Einwegkupplung mit steigendem Reibschluß der Schlingfeder wie in der oben im Zusammenhang mit der selbsttätigen Nachstellung der Bremsen beschriebenen Art.

Da jedoch das Drehmoment in entgegengesetzter Richtung, d.h. von der Schneckenwelle auf die Ver-stelleinrichtung über die Einwegkupplung übertra-gen wird, muß vor einer Verdrehung der Schneckenwelle der preßsitzartige Reibschluß zwischen der Schlingfeder und den auf der Schneckenwelle in der beschriebenen Art angeordneten Hülsen überwunden werden. Da der Reibschluß mit steigendem Drehmoment bis zum Schlupf ansteigt, können unerwünschte Reibwertschwankungen, hervorgerufen z.B. durch wechselnde Schmierverhältnisse oder durch die Fertigungstoleranz der Schlingfeder die Zugkraft in Windungsrichtung bis zur Fließgrenze des Materi-als der Schlingfeder ansteigen lassen. Dies bedeu-tet, daß entweder das erwünschte Durchdrehen der Schneckenwelle möglich ist, oder ein Bruch der Schlingfeder erfolgt.

Zwar kann durch eine Verkleinerung der Reibkräfte zwischen der Schlingfeder und den mit ihr im Reibverbindung stehenden Flächen das maximal übertragbare Drehmoment vermindert werden. Durch eine solche Maßnahme würde aber auch das durch Reibwertschwankungen bedingte minimal übertragbare Drehmoment herabgesetzt werden. Dies könnte zur Folge haben, daß das für die selbsttätige Nachstellung erforderliche Moment nicht mehr zur Verfügung steht. Dies würde schließlich eine weniger exakte oder keine Nachstellung der Bremsen, hervorgerufen durch einen vorzeitigen Schlupf der Einwegkupplung, zur Folge haben.

Der Erfindung liegt die Aufgabe zugrunde, die Nachstelleinrichtung der eingangs genannten Art so zu verbessern, daß im Vergleich zu der bekannten Einrichtung mit einfachen Mitteln bei der Vergrößerung des Abstandes der Bremsbacken von der Bremstrommel durch Betätigen der Nachstelleinrichtung das von der Schneckenwelle auf die Schlingfeder übertragene Drehmoment einen vorgebbaren Wert nicht überschreitet.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß die zwischen der Schlingfeder und der Schneckenwelle wirksame Reibkraft erhöht werden kann, so daß beim selbsttätigen Nachstellvorgang eine größere Sicherheit gegen einen vorzeitigen Schlupf der Einwegkupplung erreichbar ist.

Die Erfindung wird anhand eines Ausführungsbeispieles, daß in der Zeichnung dargestellt ist, näher erläutert.

Es zeigen:

Fig. 1 eine selbsttätige Nachstelleinrichtung für den Bremshebel einer Bremse in der Seitenansicht und teilweise im Schnitt,

Fig. 2 eine Einrichtung nach Fig. 1 mit einer Ansicht in Pfeilrichtung A,

Fig. 3 ein Zahngesperre der Einrichtung nach Fig. 1 mit Innenverzahnung,

Fig. 4 ein Zahngesperre der Einrichtung nach Fig. 1 mit einer Stirnverzahnung,

Fig. 5 ein Klemmgesperre der Einrichtung nach Fig. 1.

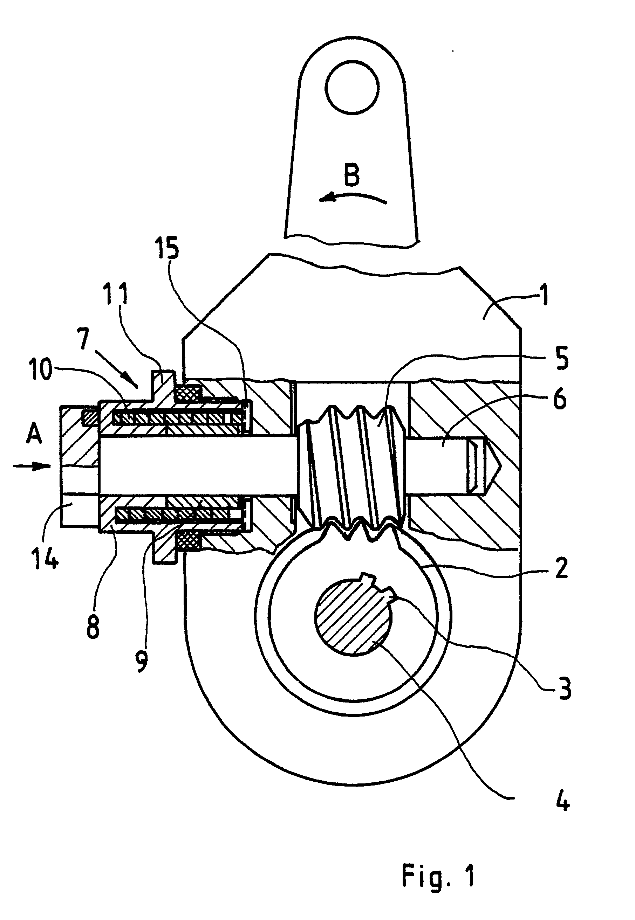

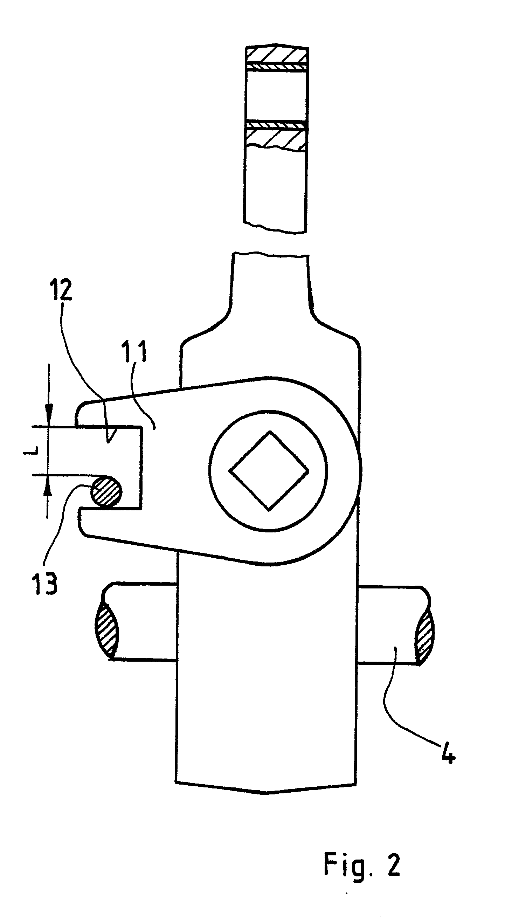

Die Fig. 1 zeigt einen Bremshebel 1, der über ein Schneckenrad 2 mit einem Keilprofil 3 mit einer Bremswelle 4 verbunden ist. Die Bremswelle 4 ist in bekannter Weise um einen begrenzten Winkelausschlag um ihre Längsachse verschwenkbar, wodurch vorzugsweise durch S-Nocken bewegbare Bremsbacken an der Bremstrommel zur Anlage gebracht werden können. Das mit der Bremswelle 4 drehfest verbundene Schneckenrad 2 steht mit einer Schnecke 5 in Eingriff, deren Schneckenwelle 6 im Bremshebel 1 drehbar gelagert und rechtwinklig zur Bremswelle angeordnet ist. Auf der Schneckenwelle 6 ist eine Einwegkupplung 7 in der Art eines Freilaufs angeordnet, die aus einer ersten, auf der Schneckenwelle 6 drehbar gelagerten Hülse 8, einer mit der Schneckenwelle 6 drehfest verbundenen zweiten Hülse 9 und einer, um die Außendurchmesser der Hülsen 8 und 9 gewundenen Schlingfeder 10 besteht. Die Hülse 8 weist einen mit ihr drehfest verbundenen Verstellhebel 11 mit einem Nachstellmaul 12 auf, das gegenüber einem am Fahrzeug angelenkten Fixpunkt 13 ein Leerspiel L aufweist, um das der Verstellhebel 11 frei schwenkbar ist (Fig. 2). Mit Hilfe eines mit der Schneckenwelle 6 drehfest verbundenen Formstückes 14, das zum Ansetzen eines Werkzeuges, z.B. eines Schlüssels oder einer Kurbel geeignet ist, läßt sich die Schneckenwelle 6 manuell verdrehen.

Zwischen dem Gehäuse des Bremshebels 1 und der Schlingfeder 10 ist ein einseitig wirkendes, aus einem Sperrglied und einer Sperrklinke bestehendes Gesperre 15 in der Art eines Zahngesperres angeordnet, das eine Torsionsbewegung der Schlingfeder 10 um die Längsachse der Schneckenwelle 6 gegenüber dem Bremshebel 1 in einer Richtung verhindert. Das Gesperre 15 ist zwischen dem Bremshebel 1 und dem der Schneckenwelle 6 zugeordneten Teil der Schlingfeder 10 angeordnet.

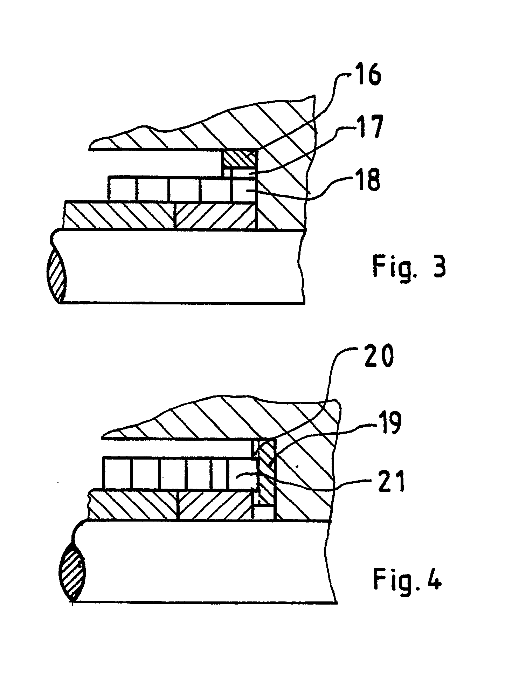

Gemäß Fig. 1 und 3 besteht das Gesperre 15 aus einem drehfest mit dem Bremshebel 1 verbundenen Sperrglied 16, das aus einem Zahnkranz mit Innenverzahnung besteht und einer Sperrklinke 17, welche durch einen radial über den Außendurchmesser der Schlingfeder 10 hinausragenden und dem Sperrglied 16 zugeordneten Windungsauslauf 18 gebildet ist.

Gemäß Fig. 4 besteht das Gesperre 15 aus einem drehfest mit dem Bremshebel 1 verbundenen Sperrglied 19, das aus einer Zahnscheibe mit Stirnverzahnung besteht und einer Sperrklinke 20, welche durch einen in axialer Richtung ausgestellten und dem Sperrglied 19 zugewandten Windungsauslauf 21 der Schlingfeder 10 gebildet ist.

Die Innenverzahnung des Sperrgliedes 16 sowie die Stirnverzahnung des Sperrgliedes 19 sind nach Art einer sägezahnförmigen Klinkenverzahnung ausgebildet.

Die Wirkungsweise der Einrichtung ist wie folgt:

Bei einer Verschwenkung in Pfeilrichtung B des Bremshebels 1 mit der Bremswelle 4 durch ein am Hebelarm des Bremshebels 1 wirkendes Betätigungselement, z.B. einem Bremszylinder, durchfährt das Nachstellmaul 12 des Verstellhebels 11 den Leerhub L, solange keine Nachstellung der Bremsen erfolgt. Mit dem Verschleiß der Bremsbeläge vergrößert sich der Bremshub von der Ausgangsstellung bis zur Anlage der Bremsbeläge an die Bremstrommel. Die Folge ist eine Vergrößerung des Schwenkwinkels des Bremshebels 1 und des Verstellhebels 11, der nach Durchfahren des Leerhubes L von dem Fixpunkt 13 proportional zum vergrößerten Schwenkwinkel des Bremshebels 1 verdreht wird. Die Windungsrichtung der Schlingfeder 10 ist jedoch so ausgelegt, daß die Einwegkupplung 7 die Verdrehung des Verstellhebels 11 während des Anlegehubes der Bremsen nicht auf die Schneckenwelle 6 überträgt, d.h. die Einwegkupplung bewegt sich in Freilaufrichtung.

Bei einer Rückstellung des Bremshebels 1 in die Ausgangsstellung durchfährt das Nachstellmaul 12 zunächst das Leerspiel L. Danach erfolgt eine Rückdrehung des Verstellhebels 11 in seine Ausgangsstellung, um einen Winkelausschlag, um den der Verstellhebel 11 während des Anlegehubes über den Leerhub L hinaus verdreht wurde. Eine dem Verstellhebel 11 analoge Bewegung der Hülse 8 gegenüber der mit der Schneckenwelle 6 drehfest verbundenen Hülse 9 erfolgt in Wicklungsrichtung der Schlingfeder 10, so daß ein zwischen den Außendurchmessern der Hülsen 8 und 9 und dem Innendurchmesser der Schlingfeder 10 ansteigender Reibschluß bis zur preßsitzartigen Verbindung der Hülsen 8 und 9 und der Schlingfeder 10 wirksam wird über die solchermaßen blockierte Einwegkupplung 7 wird von dem Verstellhebel 11 der über den Leerweg hinausgehende Winkelausschlag im Sinne einer Nachstellbewegung auf die Schneckenwelle 6 übertragen.

Die Schneckenwelle 6 ist durch Ansetzen eines Werkzeuges, z.B. eines Schlüssels oder einer Kurbel, am Formstück 14 manuell verdrehbar. Hierdurch ist der Bremshebel 1, entsprechend der Drehrichtung der Schneckenwelle 6 durch Abrollen der Schneckenwelle 6 auf dem Schneckenrad 2, entweder in Bremszustell- oder in Bremslöserichtung gegenüber der Bremswelle 4 verschwenkbar.

Bei einer Verdrehung der Schneckenwelle 6 in Bremslöserichtung, bei Anlage des Verstellmauls 12 an den Fixpunkt 13, neigt die Schlingfeder 10 dazu sich auf den Hülsen 8 und 9 in Windungsrichtung zusammenzuziehen, so daß ein Ansteigen des Drehmoments durch erhöhten Reibschluß zwischen dem Innendurchmesser der Schlingfeder 10 und den Außendurchmessern der Hülsen 8 und 9 die Folge wäre. Dies wird jedoch verhindert, weil das Gesperre 15 entgegen der Windungsrichtung der Schlingfeder 10 wirksam wird. Die Sperrklinke 17, 20 der Schlingfeder 10 greift in Sperrichtung in das Sperrglied 16 bzw. in das Sperrglied 19 ein, wodurch eine Verkleinerung des Innendurchmessers der Schlingfeder 10 und damit ein Reibschluß auf den Hülsen 8 und 9 bei weiterer Drehung der Schneckenwelle 6 in Bremslöserichtung verhindert wird. Die auf diese Weise ausgeschaltete Einwegkupplung setzt einer manuellen Verstellung der Schneckenwelle 6 in Bremslöserichtung keinen Widerstand entgegen.

Bei einer manuellen Verstellung der Schneckenwelle 6 in Bremszustellrichtung wirkt die Einwegkupplung 7 in Freilaufrichtung, d.h. die Hülse 9 wird entgegen der Windungsrichtung der Schlingfeder 10 so verdreht, daß ein Aufweiten der Schlingfeder 10 erfolgt.

Bei einer automatischen Nachstellung der Schneckenwelle 6 durch den Verstellhebel 11 über die Einwegkupplung 7 ist das Gesperre 15 wirkungslos. Die Sperrklinke 17, 20 der in Wicklungsrichtung sich zusammenziehenden Schlingfeder 10 überspringt bei diesem Nachstellvorgang die sägezahnartige Klinkenverzahnung des Sperrgliedes 16, 20.

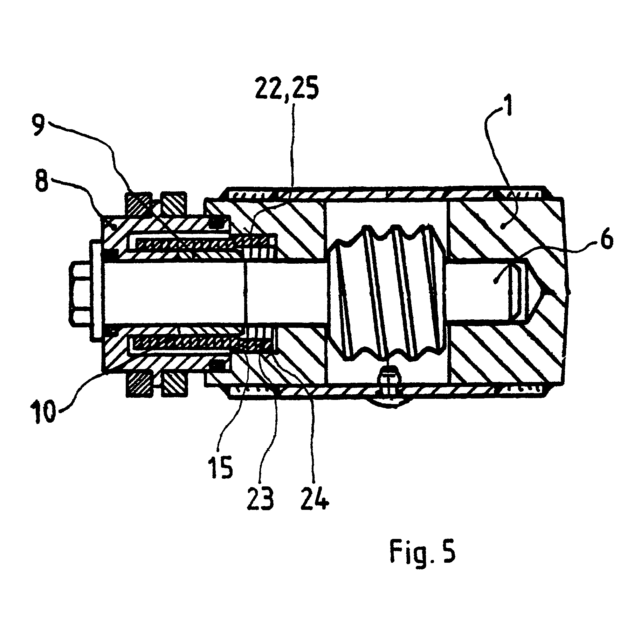

Gemäß Fig. 5 ist das zwischen dem Gehäuse des Bremshebels 1 und der Schlingfeder 10 wirkende Gesperre 15 als Klemmgesperre ausgebildet. Bei einer Verdrehung der Schneckenwelle 6 in Bremslöserichtung verhindert das Klemmgesperre, wie auch das unter Fig. 1, 3, 4 beschriebene Zahngesperre, ein Zusammenziehen der Schlingfeder 10 auf den Hülsen 8 und 9.

Das Klemmgesperre besteht aus einer im Bremshebel 1 um die Längsachse der Schneckenwelle 6 angeordneten Bohrung 25 mit einer ersten Reibfläche 22 und einem mit der Schlingfeder 10 verbundenen Reibteil 23, dem eine zweite Reibfläche 24 zugeordnet ist.

Das Reibteil 23 wird aus einem Teil der zum Bremshebel 1 weisenden Endwindungen der Schlingfeder 10 gebildet, deren Windungsdurchmesser größer ist als der des übrigen Teils der Windungen der Schlingfeder 10, der mit den Hülsen 8 und 9 in der beschriebenen Weise in Wirkverbindung steht. Die zweite Reibfläche 24 wird durch die äußere Oberfläche des Reibteils 23 gebildet.

Eine Verdrehung der Schneckenwelle 6 in Bremslöserichtung bewirkt ein Ansteigen des Drehmoments durch erhöhten Reibschluß zwischen den Reibflächen 22 und 24. Als Folge davon wird ein erhöhter Reibschluß zwischen dem Innendurchmesser der Schlingfeder 10 und den Außendurchmessern der Hülsen 8 und 9 verhindert.

## Patentansprüche

1. Selbsttätige Nachstelleinrichtung für den Bremshebel (1) einer Bremse, insbesondere für Straßenfahrzeuge, welche die folgenden Merkmale aufweist:

a) es ist ein mit einer Bremswelle (4) formschlüssig verbindbares Schneckenrad (2) vorgesehen, welches mit einer Schneckenwelle (6) in Eingriff steht;

b) die Schneckenwelle (6) ist in einem Bremshebel (1) angeordnet, welcher um die Längsachse der Bremswelle (4) verschwenkbar auf der Bremswelle (4) angeordnet ist;

c) um die Längsachse der Schneckenwelle (6) ist eine Einwegkupplung (7) in Form einer Schlingfeder (10) vorgesehen, die in Sperrichtung eine Antriebsbewegung von einer Antriebseinrichtung auf die Schneckenwelle (6) im Sinne einer Bremsnachstellung übertragen kann; gekennzeichnet durch folgendes Merkmal:

d) Es ist ein zwischen der Schlingfeder (10) und dem Bremshebel (1) wirkendes Gesperre (15) vorgesehen, das eine Torsion der Schlingfeder (10) um die Längsachse der Schneckenwelle (6) in einer Richtung verhindert.

2. Einrichtung nach Anspruch 1, dadurch gekennzeichnet, daß das Gesperre (15) bei einer Drehbewegung der Schneckenwelle (6) im Sinne einer Vergrößerung des Abstandes der Bremsbacken von der Bremstrommel eine Torsion der Schlingfeder (10) um die Längsachse der Schneckenwelle (6) in einer Richtung verhindert.

3. Einrichtung nach Anspruch 1, dadurch gekennzeichnet, daß das Gesperre (15) aus einem Zahngesperre mit einem um die Längsachse der Schneckenwelle (6) angeordneten und drehfest mit dem Bremshebel (1) verbundenen Sperrglied (16, 19) und einer Sperrklinke (17, 20) besteht.

4. Einrichtung nach Anspruch 3, dadurch gekennzeichnet, daß die Sperrklinke (17, 20) durch den dem Sperrglied (16, 19) zugewandten Windungsauslauf (18, 21) der Schlingfeder (10) gebildet ist.

5. Einrichtung nach Anspruch 3, dadurch gekennzeichnet, daß das Sperrglied (16) aus einem Zahnkranz mit Innenverzahnung (17) besteht (Fig. 3).

6. Einrichtung nach Anspruch 3, dadurch gekennzeichnet, daß das Sperrglied (19) aus einer Zahnscheibe mit einer dem Windungsauslauf (21) der Schlingfeder (10) zugewandten Stirnverzahnung (20) besteht (Fig. 4).

7. Einrichtung nach Anspruch 1, dadurch gekennzeichnet, daß das Gesperre (15) zwischen dem Bremshebel (1) und dem der Schneckenwelle (6) zugeordneten Teil der Schlingfeder (10) angeordnet ist.

8. Einrichtung nach Anspruch 1, dadurch gekennzeichnet, daß das Gesperre (15) aus einem Klemmgesperre mit einer im Bremshebel (1) um die Längsachse der Schneckenwelle (6) angeordneten ersten Reibfläche (22) und einem mit der Endwindung der Schlingfeder (10) verbundenen Reibteil (23) zugeordneten zweiten Reibfläche (24) besteht (Fig. 5).

9. Einrichtung nach Anspruch 8, dadurch gekennzeichnet, daß das Reibteil (23) aus einer Schlingfeder besteht, deren äußere Oberfläche die zweite Reibfläche (24) bildet.

10. Einrichtung nach Anspruch 8, dadurch gekennzeichnet, daß die erste Reibfläche (22) aus einer um das Reibteil (23) angeordneten Bohrung (25) des Bremshebels (1) besteht.

**Claims**

1. Automatic adjusting device for the brake lever (1) of a brake, particularly for road vehicles, having the following features:
   a) a wormwheel (2) is provided which can be positively connected to a brake shaft (4) and which is engaged with a worm gear shaft (6);
   b) the worm gear shaft (6) is arranged in a brake lever (1), the brake lever (1) being arranged on the brake shaft (4) to be pivotable about the longitudinal axis of the brake shaft (4);
   c) round the longitudinal axis of the worm gear shaft (6) a one-way coupling (7) is provided in the form of a wrapping spring (10) which in a locking direction can transmit a drive motion from a drive means to the worm gear shaft (6) for the purpose of a brake adjustement; characterised by the following feature:
   d) a locking device (15) acting between the wrapping spring (10) and the brake lever (1) is provided which prevents the wrapping sping (10) exerting torsion about the longitudinal axis of the worm gear shaft (6) in one direction.

2. Device according to Claim 1, characterised in that during a rotational movement of the worm gear shaft (6) in a direction to increase the distance between the brake shoes and the brake drum the locking device (15) prevents the wrapping spring (10) exerting torsion about the longitudinal axis of the worm gear shaft (6) in one direction.

3. Device according to Claim 1, characterised in that the locking device (15) consists of a toothed ratchet having a locking member (16, 19) arranged about the longitudinal axis of the worm gear shaft (6) and non-rotatably connected to the brake lever (1), and of a locking pawl (17, 20).

4. Device according to Claim 3, characterised in that the locking pawl (17, 20) is formed by the end (18, 21) of the winding of the wrapping spring (10) facing towards the locking member (16, 19).

5. Device according to Claim 3, characterised in that the locking member (16) consists of a toothed ring with internal teeth (17) (Fig. 3).

6. Device according to Claim 3, characterised in that the locking member (19) consists of a toothed disc with teeth (20) on its face pointing towards the end (21) of the winding of the wrapping spring (10) (Fig. 4).

7. A device according to Claim 1, characterised in that the locking device (15) is arranged between the brake lever (1) and the part of the wrapping spring (10) associated with the worm gear shaft (6).

8. Device according to Claim 1, characterised in that the locking device (15) consists of a clamping ratchet with a first friction surface (22) arranged in the brake lever (1) about the longitudinal axis of the worm gear shaft (6) and a second friction surface (24) associated with a friction part (23) connected to the end turn of the wrapping spring (10) (Fig. 5).

9. Device according to Claim 8, characterised in that the friction part (23) consists of a wrapping spring, the outer surface of which forms the second friction surface (24).

10. Device according to Claim 8, characterised in that the first friction surface (22) consists of a bore (25) of the brake lever (1) arranged round the friction part (23).

**Revendications**

1. Dispositif de rattrapage automatique pour le levier de frein (1) d'un frein, en particulier pour véhicules routiers, qui présente les particularités suivantes:
   a) il est prévu une roue à vis sans fin (2) qui peut être assemblée à un arbre de frein (4) par une liaison opérant par sûreté de forme, cette roue étant en prise avec un arbre (6) de la vis sans fin,
   b) l'arbre (6) de la vis sans fin est monté dans un levier de frein (1) qui est monté sur l'arbre de frein (4) de façon à pouvoir tourner autour de l'axe longitudinal de l'arbre de frein (4),
   c) il est prévu, autour de l'axe longitudinal de l'arbre (6) de la vis sans fin un accouplement unidirectionnel (7) présentant la forme d'un ressort enroulé (10), qui, dans le sens du blocage, peut transmettre un mouvement d'entraînement d'un dispositif d'entraînement à l'arbre de vis sans fin (6), dans le sens tendant à un rattrapage du frein, caractérisé par la caractéristique suivante:
   d) il est prévu un encliquetage (15) agissant entre le ressort enroulé (10) et le levier de frein (1) et qui empêche le ressort enroulé (10) de se tordre dans un sens autour de l'axe longitudinal de l'arbre (6) de la vis sans fin.

2. Dispositif selon la revendication 1, caractérisé en ce que, en présence d'un mouvement de rotation de l'arbre (6) de la vis sans fin dans le sens qui accroît l'écartement entre les mâchoires du frein et le tambour du frein, l'encliquetage interdit la rotation du ressort enroulé (10) dans un sens autour de l'axe longitudinal de l'arbre (6) de la vis sans fin.

3. Dispositif selon la revendication 1, caractérisé en ce que l'encliquetage (10) est composé d'un encliquetage à denture, qui comprend un organe d'encliquetage (16, 17) disposé autour de l'axe longitudinal de l'arbre de vis sans fin (6) et fixé solidairement au levier de frein (1) et un cliquet (17, 20).

4. Dispositif selon la revendication 3, caractérisé en ce que le cliquet (17, 20) est formé par l'extrémité de spire (18, 21) du ressort enroulé (10) qui est dirigée vers l'organe d'encliquetage (16, 19).

5. Dispositif selon la revendication 3, caractérisé en ce que l'organe d'encliquetage (16) est composé d'une couronne dentée munie d'une denture intérieure (17) (figure 3).

6. Dispositif selon la revendication 3, caractérisé en ce que l'organe d'encliquetage (19) est composé d'un disque denté muni d'une denture frontale (20) dirigée vers l'extrémité de spire (21) du ressort enroulé (10) (figure 4).

7. Dispositif selon la revendication 1, caractérisé

Fig. 1

EP 0 216 008 B1

12

11

L

13

4

Fig. 2

16

17

18

Fig. 3

20

19

21

Fig. 4

Fig. 5